# EUROPÄISCHE PATENTSCHRIFT

(11) **EP 0 807 146 B1**
(45) Veröffentlichungstag und Bekanntmachung des Hinweises auf die Patenterteilung: **10.11.1999**
(21) Anmeldenummer: 96900945.5
(22) Anmeldetag: 12.01.1996
(51) Int. Cl.: C09B 67/28, C09B 67/06

(54) **LEUKOINDIGO-PRÄPARATIONEN IN GRANULATFORM**
GRANULAR LEUCO INDIGO PREPARATIONS
PREPARATIONS GRANULAIRES DE LEUCO-INDIGO

(30) Priorität: 31.01.1995 DE 19502968
(43) Veröffentlichungstag der Anmeldung: 19.11.1997
(73) Patentinhaber: BASF AKTIENGESELLSCHAFT, 67056 Ludwigshafen (DE)
(72) Erfinder: GÄNG, Manfred, D-67240 Bobenheim-Roxheim (DE); KRÜGER, Rudolf, D-67273 Weisenheim (DE); MIEDERER, Peter, D-67454 Ha loch (DE); SCHLÜTER, Harald, D-67273 Weisenheim (DE); SCHULTZ, Peter, D-67098 Bad Dürkheim (DE); WOLF, Manfred, R., D-68199 Mannheim (DE)
(86) Internationale Anmeldenummer: EP9600120
(87) Internationale Veröffentlichungsnummer: WO9623841

(56) Entgegenhaltungen:
- DE-A- 4 327 221
- DE-A- 4 338 312
- FR-A- 417 071
- FR-A- 536 481
- FR-A- 580 415

## Beschreibung

Die vorliegende Erfindung betrifft neue Leukoindigo-Präparationen in Granulatform, enthaltend als wesentliche Bestandteile Leukoindigo oder Leukoformen von Indigoderivaten, Hydrosulfit (Natriumdithionit) als Reduktionsmittel und Alkalimetallhydroxid.

Weiterhin betrifft die Erfindung die Herstellung dieser Leukoindigo-Präparationen sowie ihre Verwendung zum Färben von cellulosehaltigem Textilmaterial.

Nicht zuletzt betrifft die Erfindung ein Verfahren zur Stabilisierung von trockenem Hydrosulfit gegen Selbstentzündung.

Indigoide Farbstoffe (insbesondere Indigo selbst und dessen Bromderivate wie Brillantindigo) und anthrachinoide Farbstoffe (insbesondere Nitroviolanthron (C.I. Vat Green 9)) stellen seit langer Zeit bekannte Küpenfarbstoffe dar, die zum Färben von cellulosehaltigem Textilmaterial eingesetzt werden.

Zum Färben muß der wasserunlösliche Küpenfarbstoff zunächst durch Reduktion (Verküpen) in die wasserlösliche faseraffine Leukoform überführt werden, die dann nach dem Aufziehen auf das zu färbende Material wieder zum wasserunlöslichen Küpenfarbstoff-Pigment oxidiert wird.

Bei den bekannten Färbeverfahren wird der Küpenfarbstoff in einem dem Färbebad vorgelagerten Behälter in alkalischem Medium durch Zugabe von anorganischen Reduktionsmitteln wie Hydrosulfit (Natriumdithionit) und Thioharnstoffdioxid oder auch organischen Reduktionsmitteln wie Hydroxyaceton verküpt. Zusätzliche maschinenabhängige Anteile Reduktionsmittel werden während des Färbens verbraucht, da ein Teil des Leukofarbstoffs durch den Luftkontakt in den Luftgängen und an der Färbebadoberfläche oxidiert wird und wieder verküpt werden muß, weshalb auch dem Färbebad Reduktionsmittel zugesetzt werden muß.

Nachteilig bei der Verküpung des Küpenfarbstoffs mit den genannten Reduktionsmitteln ist die hohe Belastung des Färbeabwassers durch Sulfat (etwa 3500 bis 5000 mg/l, gemessen im Abwasser einer Indigofärberei) im Fall von Hydrosulfit bzw. durch Sauerstoff verbrauchende Substanzen (CSB-Werte von ca. 8000 mg Sauerstoff/l, gemessen im Abwasser einer Indigofärberei) im Fall von Hydroxyaceton.

Im Fail des Indigos werden auch pulverförmige feste bis pastenartige Präparationen der Leukoform beschrieben, die als Stabilisatoren Polyhydroxyverbindungen, wie Glycerin und insbesondere von Zuckern abgeleitete Verbindungen, z.B. Melasse, im Gemisch mit Alkali oder Zinkstaub enthalten (DE-PS 200 914 bzw. 235 047). Weiterhin ist aus der GB-PS-276 023 die Herstellung von pulverförmigen Leukofarbstoff-Präparationen durch Erhitzen eines Gemisches von nicht reduziertem Küpenfarbstoff, Glykol, Alkali, Hydrosulfit und Natriumsulfat und Trocknen im offenen Kessel und anschließendes Mahlen bekannt.

Im Fall der erstgenannten Präparationen kann zwar der Sulfatgehalt des Färbeabwassers wirkungsvoll gesenkt werden, jedoch sind diese Präparationen in der Regel schlecht dosierbar, da auch die trockenen Präparationen zum Verklumpen neigen, und lösen sich nur langsam im Färbebad. Im letztgenannten Fall wird die Sulfatbelastung sogar noch erhöht, da den Präparationen, die ohnehin schon das durch die Reduktion des Farbstoffs im oben beschriebenen Gemisch anfallende Sulfat enthalten, auch noch Sulfat zugesetzt wird.

In der FR-A-417 071 wird die Trocknung eines wäßrigen Gemischs von Leukoindigo, Natriumhydroxid und Natriumhydrosulfit ohne Durchmischung beschrieben. Hierbei wird jedoch nach eigenen Versuchen eine feste, steinharte Masse mit hohem Anteil an reoxidiertem Leukoindigo erhalten.

In der DE-A- 43 38 312 ist die Sprühtrocknung von Leukoschwefelfarbstofflösungen beschrieben.

Aus der WO-A-94/23114 ist ein Färbeverfahren bekannt, bei dem Indigo in vorreduzierter Form als bei der katalytischen Hydrierung erhaltene, wäßrige, alkalische Lösung eingesetzt wird. Auf diese Weise entfällt die Abwasserbelastung durch organische Substanzen, die Sulfatbelastung wird auf die durch den Luftkontakt während des Färbeprozesses erforderliche Menge Hydrosulfit reduziert. Nachteilig ist jedoch, daß die verwendete Leukoindigolösung oxidationsempfindlich ist und unter Ausschluß von Sauerstoff gehandhabt und gelagert werden muß. Zudem ist der hohe Wasserballast dieser Lösung sowohl bei der Lagerung als auch beim Transport hinderlich.

Schließlich werden in der nicht vorveröffentlichten DE-A-43 27 221 Leukoindigo-Präparationen in Granulatform beschrieben, die Leukoindigo und Alkalimetallhydroxid als wesentliche Komponenten enthalten.

Der Erfindung lag die Aufgabe zugrunde, Leukoindigo-Präparationen bereitzustellen, welche die genannten Nachteile nicht aufweisen und vorteilhaft zum Färben eingesetzt werden können.

Demgemäß wurden Leukoindigo-Präparationen in Granulatform gefunden, welche als wesentliche Bestandteile Leukoindigo oder Leukoformen von Indigoderivaten, Hydrosulfit und Alkalimetallhydroxid enthalten.

Außerdem wurde ein Verfahren zur Herstellung dieser Leukoindigo-Präparationen gefunden, welches dadurch gekennzeichnet ist, daß man eine wäßrige alkalische Lösung von Leukoindigo oder der Leukoform eines Indigoderivats und eine Lösung oder Suspension von Hydrosulfit in Wasser und/oder einem wassermischbaren Lösungsmittel gemeinsam unter Durchmischung und unter Sauerstoffausschluß zur Trockene einengt und gegebenenfalls eine zusätzliche Grobzerkleinerung des getrockneten Produkts vornimmt.

Schließlich wurde ein Verfahren zum Färben von cellulosehaltigem Textilmaterial gefunden, welches dadurch gekennzeichnet ist, daß man hierfür die Leukoindigo-Präparationen verwendet.

Außerdem wurde ein Verfahren zur Stabilisierung von trockenem Hydrosulfit gegen Selbstentzündung gefunden, welches dadurch gekennzeichnet ist, daß man eine wäßrige Hydrosulfitlösung gemeinsam mit einer Leukoindigolösung in einem solchen Gewichtsverhältnis unter Sauerstoffausschluß sprühgranuliert, daß das entstehende Granulat < 50 Gew.-% Hydrosulfit enthält.

Die erfindungsgemäßen Präparationen enthalten in der Regel 20 bis 80 Gew.-% Leukoindigo, 5 bis 55 Gew.-% Hydrosulfit und 3 bis 20 Gew.-% Alkalimetallhydroxid.

Bevorzugte Beispiele für die Indigofarbstoffe sind Indigo und Tetrabromindigo (Brillantindigo).

Als Alkalimetallhydroxid eignen sich insbesondere Kaliumhydroxid und vor allem Natriumhydroxid. Selbstverständlich können auch Gemische von Alkalimetallhydroxiden eingesetzt werden.

Durch das Hydroxid wird der Leukoindigo in die gut löslichen Alkalimetallsalze überführt. Leukoindigo bildet in Abhängigkeit von der Menge an Alkalimetallhydroxid das Mono- und/oder das Di-Salz.

Das Molverhältnis Leukoindigo und Alkalimetallhydroxid beträgt daher zweckmäßigerweise etwa 1:1 bis 1:10, vorzugsweise 1:1 bis zu dem zur Überführung aller enthaltenen freien Hydroxylgruppen in die Salzform erforderlichen Molverhältnis.

Im allgemeinen reichen zur Stabilisierung des Leukoindigos bzw. der Leukoform des Indigoderivates bei Lagerung der Granulatpräparation (Schutz vor Reoxidation) Hydrosulfitmengen aus, die deutlich unter 50 Gew.-%, in der Regel bei 5 bis 30 Gew.-%, insbesondere bei 10 bis 20 Gew.-%, bezogen auf den Leukoindigo, liegen, entsprechend einer Präparation mit einer bevorzugten Zusammensetzung von 55 bis 75 Gew.-% Leukoindigo, 10 bis 20 Gew.-% Hydrosulfit und 10 bis 20 Gew.-% Alkalimetallhydroxid. Wählt man jedoch eine Hydrosulfitmenge im oberen Bereich des oben für die erfindungsgemäßen Präparationen genannten Gewichtsgehaltes, kann der durch den Luftkontakt während des Färbevorgangs zwangsläufig entstehende, reoxidierte Anteil des Indigos direkt mitausgeglichen werden, dem Färbebad muß dann kein weiteres Reduktionsmittel mehr zugesetzt werden. Dieser Hydrosulfitanteil kann durch geringfügige Variation an die jeweils verwendete Färbeanlage angepaßt werden. Hierbei sind Mengen von 20 bis 55 Gew.-%, vor allem 25 bis 35 Gew.-%, Hydrosulfit, bezogen auf Leukoindigo, entsprechend einer Präparation mit einer bevorzugten Zusammensetzung von 40 bis 60 Gew.-% Leukoindigo, 30 bis 40 Gew.-% Hydrosulfit und 8 bis 15 Gew.-% Alkalimetallhydroxid, zu empfehlen.

Der Färber muß dann also kein zusätzliches Reduktionsmittel mehr in die Hand nehmen. Das ist für das in der Küpenfärberei gängige Reduktionsmittel Hydrosulfit von besonderem Interesse, da als "Reinsubstanz", d.h. nicht als Gemisch mit einem Anteil von < 50 Gew.-%, vorliegendes Hydrosulfit wegen seiner Neigung zur Selbstentzündung nach den jetzigen Sicherheitsvorschriften als Gefahrstoff einzustufen ist und daher bei der Handhabung und der Lagerung problematisch ist.

Mit den erfindungsgemäßen Leukoindigo-Präparationen wurden nicht nur gut dosierbare, lagerstabile (Stabilität bei mehrwöchiger Lagerung bei 50°C unter Luftzutritt), das Färbeabwasser im Vergleich zum Einsatz des nichtreduzierten Indigos deutlich geringer belastende und schnell im Färbebad lösliche Indigopräparationen entwickelt, gleichzeitig wurde auch ein Weg gefunden, um Hydrosulfit in eine gefahrlose, für die Färberei geeignete Form zu überführen.

Wesentlich für die Stabilisierung des Leukoindigos gegen Reoxidation ist seine dauerhafte gleichmäßige Durchmischung mit dem Reduktionsmittel, die durch die erfindungsgemäße Granulatform (in der Regel liegen überwiegend kugelförmige Teilchen mit einer mittleren Teilchengröße von im allgemeinen 0,1 bis 2 mm, vorzugsweise 0,5 bis 1,5 mm, vor) gewährleistet wird.

Man kann den Anteil an Hydrosulfit, der über die für die Stabilisierung erforderliche Menge hinausgeht und nur zur Kompensation der Reoxidation beim Färben dient, auch dem durch Hydrosulfit bereits ausreichend stabilisierten Granulat nachträglich als Feststoff zumischen. Diese Mischungen können besonders einfach an die Erfordernisse der jeweiligen Färbeanlage angepaßt werden.

Bei der Herstellung der erfindungsgemäßen Leukoindigo-Präparationen kann man vorteilhaft die bei der Herstellung von Leukoindigo oder seinen Derivaten durch katalytische Hydrierung anfallende wäßrige Lösung nach dem Abtrennen des Katalysators direkt zur Trocknung einsetzen.

Die katalytische Hydrierung selbst kann dabei wie allgemein bekannt beispielsweise durch Reduktion eines alkalischen Indigoteigs (üblicherweise 10 bis 35 Gew.-% Indigo, 2 bis 10 Gew.-% Alkalimetallhydroxid) unter Verwendung von Raney-Nickel als Katalysator bei einem Wasserstoffdruck von im allgemeinen 2 bis 10 bar und einer Temperatur von in der Regel 60 bis 90°C erfolgt sein.

Die erhaltenen Leukoindigolösungen enthalten in der Regel 10 bis 35, bevorzugt 15 bis 30 und besonders bevorzugt 20 bis 25 Gew.-% Leukoindigo.

Beim erfindungsgemäßen Herstellungsverfahren werden die alkalischen Leukoindigolösungen gemeinsam mit einer Lösung oder Suspension von Hydrosulfit in Wasser und/oder einem wassermischbaren Lösungsmittel unter Sauerstoffausschluß, vorteilhaft nach Inertisierung mit einem Schutzgas wie Stickstoff, und unter Durchmischung zur Trockene eingeengt.

Hierfür empfehlen sich z.B. etwa 5 bis 25, bevorzugt 10 bis 15 gew.-%ige wäßrige Hydrosulfitlösungen.

Man kann die Leukoindigolösung und die Hydrosulfitlösung (bzw. -suspension) vor oder während des Trocknungsvorgangs mischen, man kann das Hydrosulfit aber auch direkt als Feststoff der Leukoindigolösung zusetzen.

Die für die Trocknung erforderliche Produkttemperatur richtet sich danach, ob unter vermindertem Druck gearbeitet wird oder nicht und beträgt üblicherweise 70 bis 90°C bzw. 105 bis 130°C.

Während des Trocknungsprozesses muß eine Durchmischung der flüssigen Phase und des anfallenden Feststoffes gewährleistet sein.

Für den großtechnischen Maßstab geeignete Apparate sind daher z.B. Taumeltrockner, Schaufeltrockner und zwangsgereinigte Kontakttrockner, in denen die Trocknung vorzugsweise unter vermindertem Druck (etwa 10 bis 500 mbar) vorgenommen wird. In der Regel empfiehlt es sich, an die eigentliche Trocknung eine Nachtrocknungszeit von etwa 1 bis 2 h bei der jeweils gewählten Trocknungstemperatur anzuschließen. Gegebenenfalls kann eine zusätzliche Grobzerkleinerung im oder außerhalb des Trocknungsapparats vorgenommen werden.

Das erfindungsgemäße Verfahren kann vorteilhaft auch in einer Sprühtrocknungsanlage wie einem Sprühturm und besonders einem Sprühwirbelbett durchgeführt werden, bei dem das Wasser unter Begasung mit heißem Inertgas, bevorzugt Stickstoff, verdampft wird. Das getrocknete Produkt kann hier direkt in der gewünschten Teilchengröße erhalten werden.

Es empfiehlt sich, das getrocknete Produkt vor dem Austrag auf eine Temperatur von in der Regel < 50°C abzukühlen, um eine Reoxidation im heißen Zustand zu vermeiden.

Mit Hilfe des erfindungsgemäßen Verfahrens können die neuen Leukoindigo-Präparationen in Granulatform auf einfache Weise kontinuierlich hergestellt werden. Im allgemeinen enthalten die getrockneten Produkte nur einen geringen Anteil (etwa < 4 Gew.-%) an nichtreduziertem Indigo.

Die erfindungsgemäßen Leukoindigo-Präparationen eignen sich vorteilhaft zum Färben von cellulosehaltigem Textilmaterial. Die erhaltenen Färbungen entsprechen vollkommen den Anforderungen. Die Abwasserbelastung mit Sulfat wird im Vergleich zur Verwendung nichtreduzierter Farbstoffe drastisch reduziert. In Abhängigkeit von der gewählten Zusammensetzung der Leukoindigo-Präparation kann das Färben auch ohne weiteren Zusatz an Reduktionsmittel zum Färbebad erfolgen.

### Beispiele

### A) Herstellung von erfindungsgemäßen Leukoindigo-Präparationen

### Beispiel 1

Eine Lösung aus 13 Gew.-% Leukoindigo (ber. als freie Säure), 6 Gew.-% Natriumhydroxid, 4 Gew.-% Hydrosulfit (88 %ig) und 77 Gew.-% Wasser wurde langsam in einen mit Stickstoff inertisierten und auf eine Ölbadtemperatur von 140°C aufgeheizten Rotationsverdampfer bei 10 mbar eingeleitet und bei einer Umdrehungszahl von 70 U/min zur Trockene eingeengt. Nach einer Nachtrocknungszeit von 2 h bei der angegebenen Ölbadtemperatur von 140°C wurde auf < 40°C abgekühlt.

Das Granulat hatte nach einer Grobzerkleinerung einen mittleren Teilchendurchmesser von 1 mm. Durch Extraktion mit Wasser im Soxleth wurde ein wasserunlöslicher Anteil (Nebenprodukte und nichtreduzierter Indigo) von < 1 Gew.-% bestimmt. Seine Zusammensetzung betrug ≈ 57 Gew.-% Leukoindigo, 17 Gew.-% Hydrosulfit und 26 Gew.-% Natriumhydroxid.

### Beispiel 2

Eine Lösung aus 13 Gew.-% Leukoindigo (ber. als freie Säure), 6 Gew.-% Natriumhydroxid, 4 Gew.-% Hydrosulfit und 77 Gew.-% Wasser wurde in einer mit Stickstoff inertisierten Wirbelschicht bei einer Wirbelgasgeschwindigkeit von 1,2 m/sec kontinuierlich sprühgranuliert. Die Zugastemperatur betrug 130°C, die Abgastemperatur lag bei 90°C und entsprach der Produkttemperatur in der Wirbelschicht. Das gebildete Granulat wurde über eine Förderschnecke aus der Wirbelschicht ausgetragen und zur Abkühlung auf Raumtemperatur mit einem Stickstoffstrom pneumatisch in einen Lagerbehälter gefördert.

Das Granulat der Nutzfraktion hatte einen mittleren Teilchendurchmesser von ca. 1 mm. Der wasserunlösliche Anteil betrug < 1 Gew.-%. Die Zusammensetzung des Granulats entsprach der Zusammensetzung des Granulats aus Beispiel 1.

### B) Färben mit erfindungsgemäßen Leukoindigo-Präparationen

### Beispiel 3

Zum Färben wurde eine übliche Indigofärbeanlage mit nur einem Bad von 2000 l Flottenvolumen, viermaligem Tauchen und Oxidieren (4 Züge) verwendet. Der Garndurchsatz an rohem Baumwollgarn Nm 12 und 4000 Fäden betrug 600 kg/h. Der fixierte Indigogehalt lag bei 1,8 %.

Bei diesen Produktionsbedingungen (Standard) wurde das Leukoindigo-Granulat aus Beispiel 1 und in einem weiteren Färbeversuch das Leukoindigo-Granulat aus Beispiel 2 während der Versuchsdauer von 8 h zur Einhaltung der bereits eingesetzten stationären (konstanten) Bedingungen kontinuierlich mit 23,5 kg/h in das Färbebad einrieseln gelassen.

Durch Verwendung dieser Leukoindigo-Granulate konnte auf separate Zugabe von Reduktionsmittel und/oder Base, die beim Standardverfahren erforderlich ist, verzichtet werden.

Das gefärbte Garn zeigte gleiche Nuance, Farbtiefe und Echtheit wie ein auf herkömmliche Weise unter ständigem Zusatz von

| | |
|---|---|
| 65 kg/h | Leukoindigolösung 20 %ig (ber. als freie Säure) |
| 4 kg/h | Hydrosulfit 88 %ig |
| 15 l/h | Natronlauge 38°Bé |

gefärbtes Garn.

## Patentansprüche

1. Leukoindigo-Präparationen in Granulatform, enthaltend als wesentliche Bestandteile Leukoindigo oder Leukoformen von Indigoderivaten, Hydrosulfit und Alkalimetallhydroxid.

2. Präparationen nach Anspruch 1, die 20 bis 80 Gew.-% Leukoindigo, 5 bis 55 Gew.-% Hydrosulfit und 3 bis 20 Gew.-% Alkalimetallhydroxid enthalten.

3. Verfahren zur Herstellung von Leukoindigo-Präparationen gemäß Anspruch 1 oder 2, dadurch gekennzeichnet, daß man eine wäßrige alkalische Lösung von Leukoindigo oder der Leukoform eines Indigoderivats und eine Lösung oder Suspension von Hydrosulfit in Wasser und/oder einem wassermischbaren Lösungsmittel gemeinsam unter Durchmischung und unter Sauerstoffausschluß zur Trockene einengt und gegebenenfalls eine zusätzliche Grobzerkleinerung des getrockneten Produkts vornimmt.

4. Verfahren nach Anspruch 3, dadurch gekennzeichnet, daß man es unter Inertgasatmosphäre und/oder Vakuum durchführt.

5. Verfahren nach Anspruch 3 oder 4, dadurch gekennzeichnet, daß man zuerst die Leukoindigolösung und die Lösung oder Suspension von Hydrosulfit mischt oder Hydrosulfit als Feststoff in die Leukoindigolösung einträgt und das Gemisch dann der Trocknung zuführt.

6. Verfahren nach den Ansprüchen 3 bis 5, dadurch gekennzeichnet, daß man es in einer Sprühtrocknungsanlage durchführt.

7. Verfahren zum Färben von cellulosehaltigem Textilmaterial, dadurch gekennzeichnet, daß man hierfür Leukoindigo-Präparationen gemäß Anspruch 1 oder 2 verwendet.

8. Verfahren zur Stabilisierung von trockenem Hydrosulfit gegen Selbstentzündung, dadurch gekennzeichnet, daß man eine wäßrige Hydrosulfitlösung gemeinsam mit einer Leukoindigolösung in einem solchen Gewichtsverhältnis unter Sauerstoffausschluß sprühgranuliert, daß das entstehende Granulat < 50 Gew.-% Hydrosulfit enthält.

## Claims

1. A leucoindigo preparation in granule form, comprising as essential constituents leucoindigo or leuco forms of indigo derivatives, hydrosulfite and alkali metal hydroxide.

2. A preparation as claimed in claim 1, which comprises from 20 to 80% by weight of leucoindigo, from 5 to 55% by weight of hydrosulfite and from 3 to 20% by weight of alkali metal hydroxide.

3. A process for preparing leucoindigo preparations as claimed in claim 1 or 2, which comprises concentrating to dryness an aqueous alkaline solution of leucoindigo or the leuco form of an indigo derivative and a solution or suspension of hydrosulfite in water and/or a water-miscible solvent together with thorough mixing and with exclusion of oxygen and if appropriate carrying out an additional coarse comminution of the dried product.

4. A process as claimed in claim 3, which is carried out under inert gas atmosphere and/or reduced pressure.

5. A process as claimed in claim 3 or 4, wherein the leucoindigo solution and the solution or suspension of hydrosulfite are first mixed or hydrosulfite is introduced into the leucoindigo solution as solid and the mixture is then subjected to drying.

6. A process as claimed in claims 3 to 5, which is carried out in a spray drying plant.

7. A process for dyeing cellulose-containing textile material, which comprises using for this leucoindigo preparations as claimed in claim 1 or 2.

8. A method of stabilizing dry hydrosulfite against self-ignition, which comprises spray granulating an aqueous hydrosulfite solution together with a leucoindigo solution with exclusion of oxygen in such a weight ratio that the resulting granules contain < 50% by weight of hydrosulfite.

## Revendications

1. Préparations de leuco-indigo sous forme de granulés, contenant en tant que constituants essentiels du leuco-indigo ou des formes leuco de dérivés de l'indigo, de l'hydrosulfite et un hydroxyde de métaux alcalins.

2. Préparations selon la revendication 1, contenant 20-80% en poids de leuco-indigo, 5-55% en poids d'hydrosulfite et 3-20% en poids d'hydroxyde de métaux alcalins.

3. Procédé de fabrication de préparations de leuco-indigo selon la revendication 1 ou 2, caractérisé en ce que l'on amène à siccité une solution aqueuse alcaline de leuco-indigo ou de la forme leuco d'un dérivé de l'indigo et une solution ou une suspension d'hydrosulfite dans l'eau et/ou dans un solvant miscible à l'eau, en les mélangeant ensemble en l'absence d'oxygène, et on effectue éventuellement un broyage grossier du produit séché.

4. Procédé selon la revendication 3, caractérisé en ce que l'on opère sous une atmosphère de gaz inerte et/ou sous vide.

5. Procédé selon la revendication 3 ou 4, caractérisé en ce que l'on mélange tout d'abord la solution de leuco-indigo et la solution ou la suspension d'hydrosulfite, ou en ce que l'on ajoute l'hydrosulfite sous forme solide dans la solution de leuco-indigo, puis on sèche ensuite le mélange.

6. Procédé selon l'une quelconque des revendications 3 à 5, caractérisé en ce que l'on opère dans une installation de séchage par pulvérisation.

7. Procédé de teinture de matériaux textiles contenant de la cellulose, caractérisé en ce que l'on utilise à cet effet des préparations de leuco-indigo selon la revendication 1 ou 2.

8. Procédé de stabilisation d'hydrosulfite sec vis à vis de l'auto inflammation, caractérisé en ce que l'on granule par vaporisation en l'absence d'oxygène, une solution aqueuse d'hydrosulfite avec une solution de leuco-indigo, dans un rapport en poids tel que le granulat obtenu contienne moins de 50% en poids d'hydrosulfite.
